# EUROPÄISCHE PATENTANMELDUNG

(11) **EP 4 811 301 A1**
(43) Veröffentlichungstag der Anmeldung: **23.09.2026**
(21) Anmeldenummer: 25164815.0
(22) Anmeldetag: 19.03.2025
(51) Int. Cl.: G06V 10/774, G06V 10/82, G06V 20/60

(54) **VERFAHREN UND SYSTEM ZUM ERKENNEN EINES OBJEKTS IN EINEM BILD**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Erkennen eines Objekts in einem digitalen Bild,
wobei folgende Schritte ausgeführt werden:
a) Bereitstellen einer Menge an Trainingsbildern, wobei jedes Trainingsbild eine Abbildung des Objekts umfasst,
b) Bereitstellen von Beschreibungen des Objekts und zu dessen Herstellungsverfahren, und Beschreibungen von verwendeten Materialien des Objekts und zu dessen Herstellung zum Objekt selbst, und Beschreibungen zur Verwendung des Objekts,
c) Bereitstellen von zumindest einem Negativ-Bild, welches das Objekt nicht umfasst und als solches als harte Verneinung des Objekts gekennzeichnet ist,
d) Erzeugen von Langtextbeschreibungen für das Objekt mithilfe der Beschreibungen unter Verwendung eines bereitgestellten großen Sprachmodells, und Erzeugen von entsprechenden Text-Bild-Zuordnungen zu jedem Trainingsbild,
wobei die Langtextbeschreibungen zumindest zwei Beschreibungen, bevorzugt drei und besonders bevorzugt mehr als drei Beschreibungen umfassen, ausgewählt aus Beschreibungen des Objekts, Beschreibungen zum Herstellungsverfahren des Objekts, Beschreibungen von verwendeten Materialien des Objekts, Beschreibungen zur Herstellung des Objekts, Beschreibungen zur Verwendung des Objekts,
e) Erzeugen und Trainieren eines Objektmodells auf Basis künstlicher Intelligenz mithilfe der im vorhergehenden Schritt erzeugten Daten und des zumindest einen Negativ-Bildes mit der harten Verneinung,
f) Erfassen eines aktuellen Bildes von einem hergestellten Produkt, welches das Objekt umfasst, und Erkennen des Objekts auf dem aktuellen Bild mithilfe des Objektmodells.

## Beschreibung

Die Erfindung betrifft ein computer-implementiertes Verfahren und ein System zum Erkennen eines Objekts in einem digitalen Bild.

Die Erfindung betrifft ferner ein Computer-Programm-Produkt.

Ein Bild-Text-Modell (engl. "vision language model", kurz VLM) ist ein Grund-Modell der künstlichen Intelligenz, ein sogenanntes "foundation model", und wird mit einem großen Datensatz von Bildern trainiert, wobei die Bilder mit textuellen Beschreibungen gepaart sind, wodurch visuelle Inhalte mit textuellen Konzepten verknüpft werden können.

VLMs können verschiedene Aufgaben wie Bildklassifizierung und Objekterkennung ausführen, ohne dass eine aufgabenspezifische Schulung erforderlich ist.

Ein Beispiel für ein beliebtes Open-Source-VLM ist CLIP, kurz für "Contrastive Language-Image Pretraining".

Dieser Ansatz hat verschiedene Anwendungsfälle in der Fertigungsindustrie, wie beispielsweise eine semantische Suche, bei der Hersteller VLMs nutzen können, um semantische Suchen in großen Bilddatenbanken durchzuführen und so das Auffinden und Abrufen relevanter Bilder von Teilen oder Produkten auf der Grundlage beschreibender Abfragen zu erleichtern.

Außerdem gibt es Anwendungen für eine effiziente Generierung von Trainingsdaten, bei welcher durch die Generierung von Beschriftungen und Anmerkungen durch textuelle Beschreibungen VLMs die Erstellung von Trainingsdatensätzen für andere in der Fertigung verwendete Modelle des maschinellen Lernens beschleunigen können.

Ferner gibt es Anwendungen für eine automatisierte Dokumentation, bei welcher VLMs bei der Erstellung und Aktualisierung von Dokumentationen helfen können, indem sie automatisch Beschreibungen oder Tags für Bilder von Maschinen, Komponenten und Prozessen generieren, was die Führung genauer Aufzeichnungen erleichtert.

Die Anwendung von VLMs in der Fertigung ist mit mehreren Herausforderungen verbunden, beispielsweise können Daten- und Domänenlücken vorliegen, denn Vision-Language-Modelle benötigen große und vielfältige Datensätze, um effektiv zu lernen.

Wenn die Trainingsdaten bestimmte Bereiche oder Nuancen, die für eine bestimmte Branche relevant sind, nicht abdecken, kann es schwierig sein, das Modell zu verallgemeinern oder bei diesen spezialisierten Aufgaben eine gute Leistung zu erbringen.

Auch kann die Anpassung an spezifische Aufgaben komplex sein, denn Modelle wie CLIP sind zwar vielseitig, aber ohne Feinabstimmung können sie bei hochspezialisierten Aufgaben nicht immer optimal funktionieren.

Die Anpassung dieser Modelle an bestimmte Anwendungen erfordert oft zusätzliche Trainings und führt möglicherweise nicht immer zu den gewünschten Leistungsverbesserungen.

Außerdem können Vision-Language-Modelle mit mehrdeutigen oder schlecht definierten Textbeschreibungen zu kämpfen haben, was zu Inkonsistenzen oder Ungenauigkeiten in ihren Interpretationen und Ausgaben führt.

Transformer-basierte Modelle wie BERT und GPT bieten kontextuelle Einbettungen, die die Bedeutung von Wörtern basierend auf ihrem umgebenden Text erfassen und so zur Klärung mehrdeutiger Beschreibungen beitragen.

Diese Modelle verwenden Aufmerksamkeitsmechanismen, um sich auf relevante Teile des Inputs zu konzentrieren und das Verständnis zu verbessern.

Diese Modelle haben möglicherweise immer noch Probleme mit hochspezialisiertem oder technischem Jargon, der in der Fertigung verwendet wird, was zu potenziellen Lücken bei der genauen Interpretation der domänenspezifischen Sprache führt.

Bei der Anpassung an spezifische Aufgaben wird im Stand der Technik das Konzept des "transfer learning" verwendet, wobei die Feinabstimmung von vortrainierten Modellen auf aufgabenspezifischen Datensätzen bei der Anpassung allgemeiner Modelle an spezialisierte Anwendungen hilft, indem domänenspezifische Beispiele genutzt werden.

Diese Methode ermöglicht es den Modellen, allgemeines Wissen zu behalten und sich gleichzeitig auf die Nuancen der Zielaufgabe zu konzentrieren.

Im Stand der Technik kann die Beschaffung hochwertiger, aufgabenspezifischer Daten für die Feinabstimmung kann eine Herausforderung und sehr aufwändig sein, was die Wirksamkeit dieses Ansatzes möglicherweise einschränkt.

Im Stand der Technik können Daten- und Domänenlücken durch Domänen-Anpassungstechniken behandelt werden, indem die Implementierung von Domänen-Anpassungsmethoden, wie beispielsweise durch "konfrontatives" Training (engl. "adversarial training") oder domänenspezifische Feinabstimmung, dabei helfen kann die Modelle so anzupassen, dass sie in neuen oder spezialisierten Domänen besser funktionieren.

Diese Techniken verfeinern die Modellparameter, um sie besser an die Eigenschaften der Zieldomäne anzupassen, jedoch fehlt eine effektive Domänenanpassung, welche eine sorgfältige Kalibrierung erfordert und empfindlich auf die Qualität des Anpassungsprozesses reagieren kann, was zu Problemen wie Überanpassung führen kann.

In Fertigungsumgebungen werden Produkte in der Regel in komplexen Taxonomien oder Hierarchien organisiert, die auf ihren Merkmalen, Funktionalitäten und Beziehungen zu anderen Produkten basieren.

Diese Taxonomien können Kategorien wie Materialien, Komponenten oder Produktversionen darstellen (z. B. "Metallzahnräder", "Kunststoffzahnräder" oder "große Zahnräder"), also eine hierarchische Gruppierung von Mengen in Teilmengen, welche beispielsweise als Baumstrukturen graphisch dargestellt werden können und auch als Klassifikation bezeichnet werden kann.

Mit anderen Worten ist eine Taxonomie ist ein einheitliches Verfahren oder Modell, also ein Klassifikationsschema, mit dem Objekte nach bestimmten Kriterien klassifiziert, das heißt in Kategorien oder Klassen - auch Taxa genannt - eingeordnet werden, wie eine hierarchische Klassifikation in Klassen, Unterklassen usw.

Taxonomien sind für die Entwicklung einer Wissenschaft von erheblicher Bedeutung: Sie erleichtern den Umgang mit Einzelfällen und ermöglichen summarische Aussagen, die bis hin zu einer Erklärung von Zusammenhängen führen können. Sie zwingen zur Klarheit über die Unterschiede zwischen den Kategorien und führen dadurch zu einem besseren Verständnis des Untersuchungsbereichs.

Traditionelle Modelle, einschließlich vortrainierter VLMs, sind nicht für solche strukturierten Informationen optimiert und behandeln Diskrepanzen zwischen Produkten als gleichermaßen falsch, unabhängig von ihrer taxonomischen Nähe.

Dieses mangelnde Bewusstsein für Produktbeziehungen kann zu einer suboptimalen Leistung bei Aufgaben wie Produktabruf, Fehlererkennung oder Klassifizierung führen, bei denen das Verständnis feiner Unterschiede zwischen ähnlichen Produkten von entscheidender Bedeutung ist.

Es ist Aufgabe der Erfindung Modelle zum Betrieb technischer Geräte, insbesondere für visuelle Anwendungen, weiter zu verbessern, sodass ein genauerer und effizienterer Betrieb eines solchen Geräts ermöglicht wird.

Die erfindungsgemäße Aufgabe wird durch ein computer-implementiertes Verfahren zum Erkennen eines Objekts in einem digitalen Bild gelöst, wobei folgende Schritte ausgeführt werden:
a) Bereitstellen einer Menge an Trainingsbildern, wobei jedes Trainingsbild eine Abbildung des Objekts umfasst,
b) Bereitstellen von Beschreibungen des Objekts und zu dessen Herstellungsverfahren, und Beschreibungen von verwendeten Materialien des Objekts und zu dessen Herstellung zum Objekt selbst, und Beschreibungen zur Verwendung des Objekts,
c) Bereitstellen von zumindest einem Negativ-Bild, welches das Objekt nicht umfasst und als solches als harte Verneinung des Objekts gekennzeichnet ist,
d) Erzeugen von Langtextbeschreibungen für das Objekt mithilfe der Beschreibungen unter Verwendung eines bereitgestellten großen Sprachmodells, und Erzeugen von entsprechenden Text-Bild-Zuordnungen zu jedem Trainingsbild,
   wobei die Langtextbeschreibungen zumindest zwei Beschreibungen, bevorzugt drei und besonders bevorzugt mehr als drei Beschreibungen umfassen, ausgewählt aus Beschreibungen des Objekts, Beschreibungen zum Herstellungsverfahren des Objekts, Beschreibungen von verwendeten Materialien des Objekts, Beschreibungen zur Herstellung des Objekts, Beschreibungen zur Verwendung des Objekts,
e) Erzeugen und Trainieren eines Objektmodells auf Basis künstlicher Intelligenz mithilfe der im vorhergehenden Schritt erzeugten Daten und des zumindest einen Negativ-Bildes mit der harten Verneinung,
f) Erfassen eines aktuellen Bildes von einem hergestellten Produkt, welches das Objekt umfasst, und Erkennen des Objekts auf dem aktuellen Bild mithilfe des Objektmodells.

In einer Weiterbildung der Erfindung ist es vorgesehen, dass die Beschreibung des Objekts die physische Form und/oder Dimensionen und/oder dessen Betriebsparameter und/oder dessen technische Funktion des Produkts beschreibt.

Die physische Form beinhaltet beispielsweise die äußere Gestaltung des Produkts, und Teilen davon, und deren Oberflächen.

Die Dimensionen betreffen beispielsweise die äußeren Abmessungen oder andere Geometrien des Produkts.

Die Betriebsparameter sind beispielsweise die Versorgungsspannung, die Betriebstemperatur, die Leistungsaufnahme, die Emissionen wie Abwärme oder Vibrationen.

Die technische Funktion beinhaltet beispielsweise die Funktion oder Anwendung eines Motors als Pumpe, als Antrieb für ein Förderband, einer Klimaanlage oder einer CNC-Fräsmaschine.

Das Produkt kann beispielsweise ein Gegenstand oder ein technisches Gerät wie ein Getriebe, ein elektronischer Schaltkreis, ein Nahrungsmittel, eine chemische Zusammensetzung oder dergleichen sein.

In einer Weiterbildung der Erfindung ist es vorgesehen, dass die Beschreibung eines verwendeten Materials des Produkts, oder von Teilen davon, oder von Materialien, welche bei der Herstellung des Produkts, oder von Teilen davon, verwendet werden, umfasst, und daraus eine entsprechende Beschreibung für das Objekt abgeleitet wird.

Das Material kann beispielsweise ein Rohstoff oder ein Klebstoff oder auch ein Schmiermittel sein.

In einer Weiterbildung der Erfindung ist es vorgesehen, dass die Beschreibung zur Herstellung des Produkts, oder von Teilen davon, eine Anleitung zur Durchführung eines Herstellungsverfahrens oder eine Anleitung für ein Bearbeitungsverfahren für ein Werkstück ist, aus welchem das Produkt, oder Teile davon, umfasst, und daraus eine entsprechende Beschreibung für das Objekt abgeleitet wird.

Das Herstellungsverfahren kann beispielsweise ein Zusammenbau aus mehreren Teilkomponenten sein, oder eine Bearbeitung eines Werkstücks durch eine CNC-Fräsmaschine, oder eine Zubereitung eines Nahrungsmittels.

Dadurch ist eine Feinabstimmung von VLMs für Fertigungsanwendungen unter Verwendung von Produktdaten aus einem "Product Lifecycle Management" System (kurz PLM) auf effiziente Weise möglich.

Mit anderen Worten erfolgt ein dreistufiger Trainingsansatz, um die Fähigkeit von VLMs zu verbessern, Text und Bilder aufeinander abzustimmen, komplexe Fertigungsbeschreibungen zu verarbeiten und relevante Informationen in einer Fertigungsumgebung abzurufen.

Zunächst erfolgt ein Ausrichten von Text-Bild-Darstellungen, um ein Bild-Text-Modell oder auch Vision-Language-Modell (kurz VLM) wie CLIP zu optimieren, und beispielweise Produktbilder mit Hilfe großflächiger Bild-Text-Paare an Kurzbeschreibungen auszurichten, wodurch die Ähnlichkeit für korrekte Paare maximiert und die Ähnlichkeit für falsche Paare minimiert wird, indem große Losgrößen verwendet werden, was zu einer verbesserten Effizienz führt.

Großen Losgrößen können tausende, hunderttausende oder auch mehr als eine Million Produktbilder umfassen.

Anschließend erfolgt eine Einführung von Langtextbeschreibungen und harten Verneinungen, wobei das Modell um den Umgang mit Langtextbeschreibungen erweitert wird, wie beispielsweise detaillierte Handbücher, und lange Untertitel und Text-Text-Paare trainiert werden.

Werden harte Verneinungen eingeführt, also beispielsweise irreführende, aber ähnliche Text-Bild-Paare, kann die Fähigkeit des Modells verbessert werden, zwischen richtigen und falschen Beschreibungen zu unterscheiden, wobei in dieser Phase werden kleinere Losgrößen verwendet werden, um längere Texte aufzunehmen.

Nachfolgend werden synthetische Daten und endgültige Optimierung eingeführt, indem synthetische Textdaten generiert werden, um das Verständnis des Modells für detaillierte Beschreibungen zu verbessern, und das Modell mit harten Negativen und Tripletts zu verfeinern, um die Abrufgenauigkeit zu verbessern.

Es erfolgt eine domänenspezifische Feinabstimmung für fertigungsbezogene Datensätze und die Leistung des Modells bei Aufgaben wird bewertet, wie Text-Bild-Abruf, Klassifizierung und Zero-Shot-Aufgaben.

Mit einem System für digitales PLM wie der Software "Teamcenter" von Siemens können Produktteams mit ihren Zulieferern, Partnern und Kunden in einer gemeinsamen Umgebung so zusammenarbeiten, dass Konzeptstudien, Programmüberprüfungen, Konstruktionsüberprüfungen oder Konstruktionsänderungen realisiert werden können.

Um die zugehörigen Informationen aus System wie "TeamCenter" für die beschriebenen Phasen zu erhalten und zu verwalten, können die folgenden Ansätze genutzt werden:
Beim Datenabruf können API oder Integrationstools von "TeamCenter" verwendet werden, um Produktbilder und Kurzbeschreibungen (wie beispielsweise CAD-Designs oder technische Spezifikationen) aus der Datenbank zu extrahieren.

In einer Weiterbildung der Erfindung ist es vorgesehen, dass die Beschreibung zur Verwendung des Produkts eine Bedienungsanleitung und/oder eine Montageanleitung für das Produkt, oder Teilen davon, umfasst, und daraus eine entsprechende Beschreibung für das Objekt abgeleitet wird.

Für Langtextdaten können also detaillierte Handbücher, Montageverfahren und komplexe Textbeschreibungen aus dem Dokumentationsmanagementsystem von "TeamCenter" abgerufen werden.

Text-Text-Paare können verwendet werden, um Versionskontroll- und Dokumentationsfunktionen von "TeamCenter" verwendet werden, um mehrere Beschreibungen oder Revisionen desselben Produkts für das Training von Text-Text-Paaren zu identifizieren und zu extrahieren.

Für "Harte Negative" können ein Produktkatalog von "TeamCenter" als Beispiele verwendet werden, welche kontextbezogen, aber dennoch falsch sind, und optimalerweise auch als solche klar mit entsprechenden Markierungen gekennzeichnet sind.

Solche Markierungen können beispielsweise manuell angebracht werden, oder beispeilsweise über die Ausführung von Ähnlichkeitsfunktionen, bei welchen ein Ähnlichkeitswert zwischen dem gewünschten Objekt und "falschen" Darstellungen des Objekts bestimmt wird, welcher außerhalb eines vorgegebenen Wertebereis liegt.

Die "falschen" Darstellungen des Objekts sollten dabei als solche beispielsweise manuell oder durch Anwendung einer alternativen, beispielsweise komplexeren Ähnlichkeitsfunktion gekennzeichnet werden.

Wenn dabei die Aufgabe beispielsweise darin besteht, Produktbilder mit Beschreibungen abzugleichen, können Beschreibungen hinzugefügt werden, welche in Struktur oder Terminologie ähnlich sind, sich aber auf unterschiedliche Produkte oder Komponenten beziehen.

In einer Weiterbildung der Erfindung ist es vorgesehen, dass die Beschreibung domänenspezifische Informationen umfasst, welche eine Kategorie des Produkts beinhaltet.

Als domänenspezifische Feinabstimmung können domänenspezifische Dokumente von "TeamCenter" wie Schaltpläne und Qualitätskontrolldokumente für die Feinabstimmung des Modells herangezogen werden, wobei sichergestellt sein sollte, dass die Daten in "TeamCenter" genau kategorisiert und mit Kennungen beziehungsweise Tags versehen werden, um effektiv in Trainings verwendet werden zu können.

In einer Weiterbildung der Erfindung ist es vorgesehen, dass das große Sprachmodell ein Modell auf Basis künstlicher Intelligenz, insbesondere ein Grund-Modell ist, beispielsweise ein sogenanntes "vision language model", VLM.

In einer Weiterbildung der Erfindung ist es vorgesehen, dass bei der Verwendung des großen Sprachmodells dessen Leistungsfähigkeit beim Erzeugen der Langtextbeschreibungen berücksichtigt wird, beispielsweise ein Text-Bild-Abruf und/oder eine Klassifizierung.

Dadurch kann erreicht werden, dass ein großes Sprachmodell, wie beispielsweise ChatGPT oder Microsoft Copilot, welches durch allgemeine Trainingsdaten erzeugt und trainiert wurde, für eine spezifische Anwendung verwendet wird, und so auf das aufwändige spezifische Training eines Modells verzichtet werden kann.

In einer Weiterbildung der Erfindung ist es vorgesehen, dass beim Training und beim Anwenden des Objektmodells eine Verlustfunktion bestimmt wird, um die Ähnlichkeit zwischen korrekten und falschen Zuordnungen zu berechnen, wobei bevorzugt der Taxonomie-verstärkte kontrastive Verlust, der "InfoNCE"-Verlust, und besonders bevorzugt der "Contrastive Alignment"-Verlust, CAL, bestimmt wird.

Es kann also eine Verlustfunktion bestimmt werden, welcher in allen vorher genannten Phasen angewandt werden kann, wobei der häufig verwendete "InfoNCE"-Verlust durch einen benutzerdefinierten "Contrastive Alignment Loss" (CAL) ersetzt werden kann.

Diese Verlustfunktion, CAL, funktioniert ähnlich, indem sie die Ähnlichkeit zwischen korrekten Text-Bild- und Text-Text-Paaren maximiert, während die Ähnlichkeit für falsche Paare minimiert wird.

Mithilfe von CAL können die Einbettungen von Produkten, deren Beschreibungen und Herstellungsschritte effektiv aufeinander abgestimmt werden.

In einer Weiterbildung der Erfindung ist es vorgesehen, dass das Produkt Teilprodukte aufweist, welche mithilfe eines Graphen beschrieben werden können, und beim Training und beim Anwenden des Objektmodells eine Distanzfunktion für den Graphen bestimmt wird, um die Distanz Teilprodukten zu berechnen.

Um den InfoNCE-Verlust um die Berechnung der Produktdistanz unter Verwendung eines Produkt-Taxonomiebaums oder einer graphenartigen Struktur zu erweitern, kann der hierarchische oder relationale Abstand zwischen den Produkten als zusätzlichen Faktor in die Berechnung des kontrastiven Verlusts einbezogen werden.

Auf diese Weise kann nicht nur berücksichtigt werden, ob Produkte übereinstimmen oder nicht, sondern auch, wie ähnlich oder unähnlich die Produkte sind, basierend auf ihrer Position innerhalb einer Produkttaxonomie (beispielsweise eine Baum- oder Diagrammstruktur).

Eine Taxonomie ist ein einheitliches Verfahren oder Modell (Klassifikationsschema), bei welchem Objekte nach bestimmten Kriterien klassifiziert, das heißt in Kategorien oder Klassen (auch Taxa genannt) eingeordnet werden.

Der Begriff der Taxonomie kann für eine in der Regel hierarchische Klassifikation (Klassen, Unterklassen usw.) verwendet werden und erlauben Klarheit über die Unterschiede zwischen den Kategorien und führen dadurch zu einem besseren Verständnis des Untersuchungsbereichs.

Ein Produkt-Taxonomiebaum oder ein Taxonomiediagramm ist eine Struktur, welche Beziehungen zwischen Produkten darstellt, wobei Knoten Produkte oder Produktkategorien darstellen und Kanten die Verbindungen darstellen, wie beispielsweise übergeordnete oder verwandte Kategorien.

Eine Entfernungsmetrik in der Taxonomie dient dazu, den Abstand oder die Distanz zwischen zwei Produkten in der Taxonomie zu messen, wobei der Baumabstand beispielsweise die Anzahl der Kanten zwischen zwei Knoten in einem Baum sein kann, oder der Diagrammabstand auf einem Algorithmus für den kürzesten Pfad basieren kann.

Für den Produkttaxonomie-Abstand kann eine Abstandsfunktion *d*(*pᵢ, pⱼ*) definiert werden, welche in der Taxonomie den Abstand zwischen zwei Produkten *pᵢ* und *pⱼ* berechnet.

Dieser Abstand kann beispielweise ein baumbasierter Abstand sein, nämlich die Anzahl der Kanten zwischen zwei Produkten im Taxonomiebaum.

Der Abstand kann aber auch beispielweise ein diagrammbasierter Abstand sein, nämlich der kürzeste Weg zwischen zwei Produkten in einem Produktdiagramm, bei dem Produkte über mehrere Kanten verbunden sein können, die verschiedene Beziehungen darstellen, wie beispielsweise eine "ähnliche Größe" oder eine "gleiches Material". $d \left({p}_{i}, {p}_{j}\right) = Distanz \left({p}_{i}, {p}_{j}\right)$

Wobei *pᵢ, pⱼ* Knoten im Taxonomiebaum/-diagramm sind.

Je weiter zwei Produkte voneinander entfernt sind, desto unterschiedlicher können sie betrachtet werden.

Ein gewichteter InfoNCE-Verlust (Taxonomie-verstärkter kontrastiver Verlust) kann verwendet werden, um die Produktdistanz in den InfoNCE-Verlust zu integrieren, und der kontrastive Verlust kann modifiziert werden, um die Ähnlichkeit zwischen den Produkteinbettungen basierend auf ihrem Abstand in der Taxonomie zu gewichten.

InfoNCE ist eine Methode zur gemeinsamen Optimierung zweier Modelle, basierend auf "Noise Contrastive Estimation" (kur NCE), was eine Art einer kontrastiven Verlustfunktion ist, welche häufig bei self-supervised learning angewandt wird.

Produkte, die taxonomisch nahe beieinander liegen, sollten eine geringere "Bestrafung" erhalten, wenn sie nicht übereinstimmen, als Produkte, die taxonomisch weit voneinander entfernt sind.

Die sogenannte "Bestrafung" kann beispielsweise über einen entsprechenden Gewichts-Faktor für die jeweiligen Produkte berücksichtigt werden, welche nahe an der Taxonomie, also am Maximum in der Ähnlichkeitsfunktion liegen, oder dem entgegen eben weit von der Taxonomie abliegen.

Der modifizierte Taxonomie-verstärkte kontrastive Verlust TECL ist gegeben durch: ${L}_{TECL} = {\sum }_{i = 1}^{N} - log \frac{exp \left(sim\left({q}_{i}, {p}_{i}\right)/τ\right)}{{\sum }_{j = 1}^{N} exp \left(sim\left({q}_{i}, {p}_{j}\right)/\left(τ⋅\left(1+α⋅d\left({p}_{i}, {p}_{j}\right)\right)\right)\right)}$ wobei
- *sim*(*qᵢ, pⱼ*): die cosinus-Ähnlichkeit der Abfrage *qᵢ*, beispielsweise eine Produktbeschreibung, und des Embedding *pⱼ* ist,
- τ: ein Temperatur-Parameter ist, welcher die Schärfe der Ähnlichkeit steuert,
- *d*(*pᵢ, pⱼ*): der Abstand zwischen zwei Produkten *pᵢ* und *pⱼ* in der Taxonomie ist, und
- *α*: ein Gewichts-Faktor ist, welcher den Einfluss des Taxonomie-Abstands auf den Verlust steuert, wobei ein größerer Gewichts-Faktor *α* die "Bestrafung" für Produkte erhöht, welche weit von der Taxonomie abliegen.

Unter einem "Embedding" - einer "Einbettung" - kann eine Abbildung verstanden werden, die es ermöglicht, ein Objekt als Teil eines anderen aufzufassen.

Häufig ist damit lediglich eine injektive Abbildung (im Fall "flacher", das heißt unstrukturierter Mengen) oder ein Monomorphismus (strukturtreue injektive Abbildung, im Fall mathematischer Strukturen) gemeint.

Ein Sonderfall ist die kanonische Einbettung (Inklusion) einer Untermenge oder Unterstruktur in eine sie enthaltende Menge bzw. Struktur.

Mit einer scharfen Ähnlichkeit ist beispielsweise gemeint, dass die entsprechende Ähnlichkeitsfunktion ein Maximum aufweist, wobei das Maximum durch einen engen, schmalen Funktionsverlauf charakterisiert ist, und auch durch eine geringe Varianz der Eingangsverteilungsfunktion definiert werden kann, und beispielsweise unter Anwendung des Gauss-Markov-Satzes bestimmt werden kann.

In der Mathematik ist eine Einbettung (engl. "embedding") eine Instanz einer mathematischen Struktur, die in einer anderen Instanz enthalten ist, beispielsweise einer Gruppe, die eine Untergruppe ist.

Eine Bildeinbettung beziehungsweise Bild-Embedding ist eine numerische Darstellung eines Bildes, die die Semantik der Inhalte im Bild kodiert.

Einbettungen werden durch Computer-Vision-Modelle berechnet, die normalerweise mit großen Datensätzen aus Text- und Bildpaaren trainiert werden

Mit anderen Worten sind Bild-Embeddings also numerische Darstellungen von Bildern, die deren semantische Bedeutung und visuelle Merkmale erfassen und können beispielsweise für Anwendungen wie Bildsuche, Bildklassifizierung, Bildwiederherstellung und Bildähnlichkeit eingesetzt werden.

Der Taxonomie-verstärkte kontrastive Verlust, der InfoNCE-Verlust, kann bestimmt werden, indem zunächst die Produkttaxonomie in Form eines Baums oder eines Diagramms vorbestimmt wird und dann paarweise Distanzen *d*(*pᵢ, pⱼ*) für alle Produkte im Datensatz berechnet werden.

Anschließend werden während des Trainings für jedes Los folgende Berechnungen durchgeführt:
- Berechnen der Embeddings für sowohl Abfrage-Text, wie Produkt-Beschreibungen, als auch Produkt-Bilder,
- Berechnen der Cosinus-Ähnlichkeit für jede Abfrage mit jedem Produkt-Embedding,
- Anpassen des Ähnlichkeits-Werts basierend auf dem Produkt-Abstand unter Verwendung des Gewichts *α*,
- Berechnen des modifizierten Taxonomie-verstärkte kontrastive Verlusts TECL.

Schließlich wird der Verlust zurückübertragen und die Modell-Parameter werden aktualisiert.

Durch die Feinabstimmung von VLMs mit einem Produkttaxonomie-bewussten Ansatz kann eine Struktur angewandt werden, welche es dem Modell ermöglicht, verwandte Produkte besser zu erkennen und zu unterscheiden.

Das Problem der semantischen Fehlausrichtung kann also gelöst werden, indem der Produktabstand in den Entscheidungsprozess des Modells integriert wird und sichergestellt wird, dass Produkte, die taxonomisch nahe beieinander liegen (z. B. zwei Arten von Metallzahnrädern), ähnlicher behandelt werden als solche, die weit voneinander entfernt sind (z. B. ein Metallzahnrad und ein Kunststoffteil).

Dadurch kann die Leistung von VLMs bei verschiedenen Fertigungsaufgaben verbessert werden, sowie die Genauigkeit der Produktabrufe, die Fehlerklassifizierung und andere industrielle Anwendungen, bei denen das Verständnis der Beziehungen zwischen Produkten vorteilhaft ist.

In einer Weiterbildung der Erfindung ist es dementsprechend vorgesehen, dass die Menge an Trainingsbildern ferner zumindest ein Trainingsbild umfasst, welches eine ähnliche Abbildung des Objekts umfasst, wobei die Ähnlichkeit anhand einer Ähnlichkeitsfunktion bestimmt wird, deren Wert in einem vorbestimmten Wertebereich liegt.

In einer Weiterbildung der Erfindung ist es dementsprechend vorgesehen, dass die Menge an Trainingsbildern ferner zumindest ein Trainingsbild umfasst, welches eine ähnliche Abbildung des Objekts umfasst, wobei die Ähnlichkeit anhand einer Distanzfunktion bestimmt wird, deren Wert in einem vorbestimmten Wertebereich liegt.

Aus der Ähnlichkeit kann auch ein Verlust, wie der Taxonomie-verstärkte kontrastive Verlust berechnet werden, wie zuvor ausgeführt.

Mit anderen Worten kann die Ähnlichkeit, also das Maß der Ähnlichkeit der Abbildung des Objekts zu einem entsprechenden Objektmodell, alternativ anhand einer Verlustfunktion bestimmt werden, deren Wert in einem vorbestimmten Wertebereich liegt.

System zum Erkennen eines Objekts in einem digitalen Bild, umfassend eine Rechenvorrichtung mit einem Prozessor und einem Speicher, wobei das System dazu eingerichtet ist, das Verfahren nach einem der vorhergehenden Ansprüche auszuführen.

In einer Weiterbildung der Erfindung ist es vorgesehen, dass ferner ein bildgebender Sensor umfasst ist, welcher dazu eingerichtet ist, ein hergestelltes Produkt als Objekt mithilfe eines digitalen Bilds zu erfassen.

Computer-Programm-Produkt, umfassend Befehle, die bei der Ausführung des Programms durch das System nach einem der vorhergehenden System-Ansprüche dieses veranlassen, das Verfahren/die Schritte des Verfahrens nach einem der vorhergehenden Verfahrens-Ansprüche auszuführen.

Die Erfindung wird anhand von eines Ausführungsbeispiels näher beschrieben. Die Figuren zeigen in
Fig. 1 ein Beispiel des erfindungsgemäßen Verfahrens in Form eines Flussdiagramms,

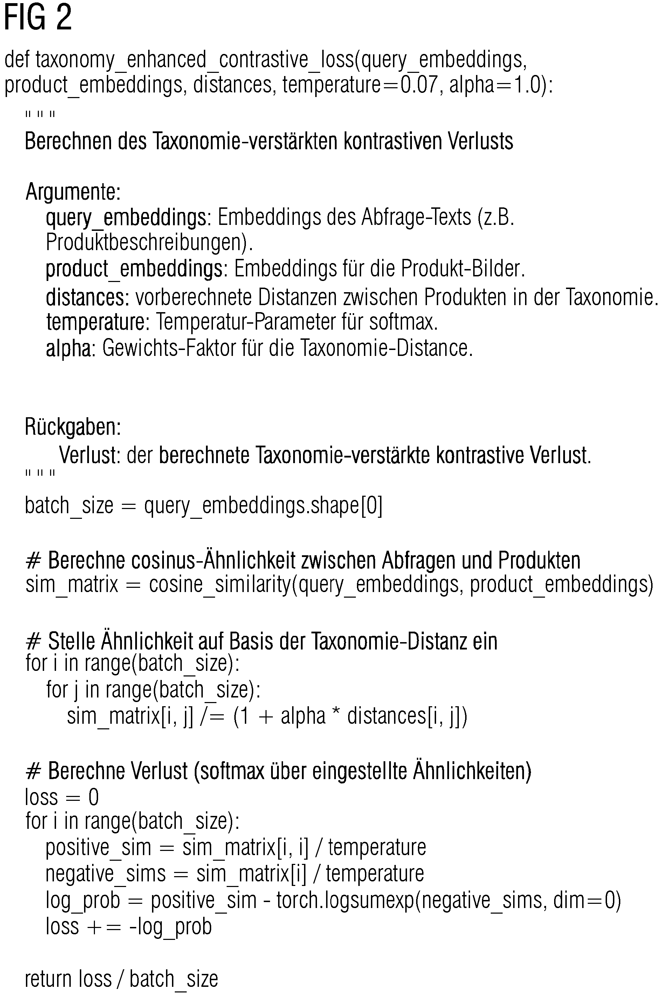

Fig. 2 ein Beispiel des erfindungsgemäßen Verfahrens in Form eines Pseudocodes.

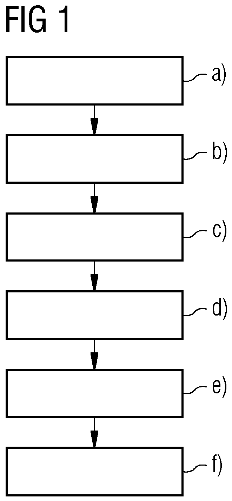

Fig. 1 stellt das Verfahren zum Erkennen eines Objekts in einem digitalen Bild dar.

Folgende Schritte werden dabei ausgeführt, wobei zumindest ein Schritt in einem Computer implementiert ist:
a) Bereitstellen einer Menge an Trainingsbildern, wobei jedes Trainingsbild eine Abbildung des Objekts umfasst,
b) Bereitstellen von Beschreibungen des Objekts und zu dessen Herstellungsverfahren, und Beschreibungen von verwendeten Materialien des Objekts und zu dessen Herstellung zum Objekt selbst, und Beschreibungen zur Verwendung des Objekts,
c) Bereitstellen von zumindest einem Negativ-Bild, welches das Objekt nicht umfasst und als solches als harte Verneinung des Objekts gekennzeichnet ist,
d) Erzeugen von Langtextbeschreibungen für das Objekt mithilfe der Beschreibungen unter Verwendung eines bereitgestellten großen Sprachmodells, und Erzeugen von entsprechenden Text-Bild-Zuordnungen zu jedem Trainingsbild,
   wobei die Langtextbeschreibungen zumindest zwei Beschreibungen, bevorzugt drei und besonders bevorzugt mehr als drei Beschreibungen umfassen, ausgewählt aus Beschreibungen des Objekts, Beschreibungen zum Herstellungsverfahren des Objekts, Beschreibungen von verwendeten Materialien des Objekts, Beschreibungen zur Herstellung des Objekts, Beschreibungen zur Verwendung des Objekts,
e) Erzeugen und Trainieren eines Objektmodells auf Basis künstlicher Intelligenz mithilfe der im vorhergehenden Schritt erzeugten Daten und des zumindest einen Negativ-Bildes mit der harten Verneinung,
f) Erfassen eines aktuellen Bildes von einem hergestellten Produkt, welches das Objekt umfasst, und Erkennen des Objekts auf dem aktuellen Bild mithilfe des Objektmodells.

Die Beschreibung des Objekts kann die physische Form und/oder Dimensionen und/oder dessen Betriebsparameter und/oder dessen technische Funktion des Produkts beschreiben.

Die Beschreibung kann ein verwendetes Material des Produkts, oder von Teilen davon, umfassen, oder auch Materialien, welche bei der Herstellung des Produkts, oder von Teilen davon, verwendet werden umfassen.

Daraus kann eine entsprechende Beschreibung für das Objekt abgeleitet werden.

Die Beschreibung zur Herstellung des Produkts, oder von Teilen davon, kann eine Anleitung zur Durchführung eines Herstellungsverfahrens oder eine Anleitung für ein Bearbeitungsverfahren für ein Werkstück ist, aus welchem das Produkt, oder Teile davon, umfassen.

Daraus kann eine entsprechende Beschreibung für das Objekt abgeleitet werden.

Die Beschreibung zur Verwendung des Produkts kann eine Bedienungsanleitung und/oder eine Montageanleitung für das Produkt, oder Teilen davon, umfassen.

Daraus kann eine entsprechende Beschreibung für das Objekt abgeleitet werden.

Die Beschreibung kann eine oder mehrere domänenspezifische Informationen umfassen, welche eine Kategorie des Produkts beinhaltet.

Das große Sprachmodell kann ein Modell auf Basis künstlicher Intelligenz, insbesondere ein Grund-Modell, sein, beispielsweise ein Bild-Text-Modell, VLM.

Bei der Verwendung des großen Sprachmodells kann dessen Leistungsfähigkeit beim Erzeugen der Langtextbeschreibungen berücksichtigt werden, beispielsweise ein Text-Bild-Abruf und/oder eine Klassifizierung.

Beim Training und beim Anwenden des Objektmodells kann eine Verlustfunktion bestimmt werden, um die Ähnlichkeit zwischen korrekten und falschen Zuordnungen zu berechnen.

Dabei kann bevorzugt der Taxonomie-verstärkte kontrastive Verlust, der "InfoNCE"-Verlust, oder der "Contrastive Alignment"-Verlust, CAL, bestimmt werden.

Das Produkt kann Teilprodukte aufweisen, welche mithilfe eines Graphen beschrieben werden können.

Beim Training und beim Anwenden des Objektmodells kann dabei eine Distanzfunktion für den Graphen bestimmt werden, um die Distanz von Teilprodukten zu berechnen.

Die Menge an Trainingsbildern kann ferner zumindest ein Trainingsbild umfassen, welches eine ähnliche Abbildung des Objekts umfasst.

Dabei kann die Ähnlichkeit beispielsweise anhand einer Ähnlichkeitsfunktion bestimmt werden, deren Wert in einem vorbestimmten Wertebereich liegt.

Die Menge an Trainingsbildern kann ferner zumindest ein Trainingsbild umfassen, welches eine ähnliche Abbildung des Objekts umfasst.

Dabei kann die Ähnlichkeit beispielsweise anhand einer Ähnlichkeitsfunktion bestimmt werden, deren Wert in einem vorbestimmten Wertebereich liegt.

Das beschriebene Verfahren kann von einem System zum Erkennen eines Objekts in einem digitalen Bild ausgeführt werden, welches eine Rechenvorrichtung mit einem Prozessor und einem Speicher umfasst.

Das System kann ferner einen bildgebenden Sensor umfassen, beispielsweise eine Kamera mit einer verbundenen entsprechenden Steuervorrichtung zum Erfassen eines digitalen Bildes.

Ein von einer Produktionsvorrichtung hergestellte Produkt kann beispielsweise mithilfe eines Förderbands in das Sichtfeld der Kamera befördert werden.

Die Kamera kann somit das hergestellte Produkt mithilfe eines digitalen Bildes als Objekt erfassen und durch Anwendung des genannten Verfahrens kann das Objekt im Bild erkannt werden und das daraus ermittelte Ergebnis weiterverarbeitet werden.

*Unabhängig vom grammatikalischen Geschlecht eines bestimmten Begriffes sind Personen mit männlicher, weiblicher oder anderer Geschlechteridentität mit umfasst.*

## Patentansprüche

1. Computer-implementiertes Verfahren zum Erkennen eines Objekts in einem digitalen Bild, wobei folgende Schritte ausgeführt werden:
a) Bereitstellen einer Menge an Trainingsbildern, wobei jedes Trainingsbild aus der Menge eine Abbildung des Objekts umfasst,
b) Bereitstellen von Beschreibungen des Objekts und zu dessen Herstellungsverfahren, und Beschreibungen von verwendeten Materialien des Objekts und zu dessen Herstellung zum Objekt selbst, und Beschreibungen zur Verwendung des Objekts,
c) Bereitstellen von zumindest einem Negativ-Bild, welches das Objekt nicht umfasst und als solches als harte Verneinung des Objekts gekennzeichnet ist,
d) Erzeugen von Langtextbeschreibungen für das Objekt mithilfe der Beschreibungen unter Verwendung eines bereitgestellten großen Sprachmodells, und Erzeugen von entsprechenden Text-Bild-Zuordnungen zu jedem Trainingsbild,
wobei die Langtextbeschreibungen zumindest zwei Beschreibungen, bevorzugt drei und besonders bevorzugt mehr als drei Beschreibungen umfassen, ausgewählt aus Beschreibungen des Objekts, Beschreibungen zum Herstellungsverfahren des Objekts, Beschreibungen von verwendeten Materialien des Objekts, Beschreibungen zur Herstellung des Objekts, Beschreibungen zur Verwendung des Objekts,
e) Erzeugen und Trainieren eines Objektmodells auf Basis künstlicher Intelligenz mithilfe der im vorhergehenden Schritt erzeugten Daten und des zumindest einen Negativ-Bildes mit der harten Verneinung,
f) Erfassen eines aktuellen Bildes von einem hergestellten Produkt, welches das Objekt umfasst, und Erkennen des Objekts auf dem aktuellen Bild mithilfe des Objektmodells.

2. Verfahren nach dem vorhergehenden Anspruch, wobei die Beschreibung des Objekts die physische Form und/oder Dimensionen und/oder dessen Betriebsparameter und/oder dessen technische Funktion des Produkts beschreibt.

3. Verfahren nach einem der vorhergehenden Ansprüche, wobei die Beschreibung eines verwendeten Materials des Produkts, oder von Teilen davon, oder von Materialien, welche bei der Herstellung des Produkts, oder von Teilen davon, verwendet werden, umfasst, und daraus eine entsprechende Beschreibung für das Objekt abgeleitet wird.

4. Verfahren nach einem der vorhergehenden Ansprüche, wobei die Beschreibung zur Herstellung des Produkts, oder von Teilen davon, eine Anleitung zur Durchführung eines Herstellungsverfahrens oder eine Anleitung für ein Bearbeitungsverfahren für ein Werkstück ist, aus welchem das Produkt, oder Teile davon, umfasst, und daraus eine entsprechende Beschreibung für das Objekt abgeleitet wird.

5. Verfahren nach einem der vorhergehenden Ansprüche, wobei die Beschreibung zur Verwendung des Produkts eine Bedienungsanleitung und/oder eine Montageanleitung für das Produkt, oder Teilen davon, umfasst, und daraus eine entsprechende Beschreibung für das Objekt abgeleitet wird.

6. Verfahren nach einem der vorhergehenden Ansprüche, wobei die Beschreibung domänenspezifische Informationen umfasst, welche eine Kategorie des Produkts beinhaltet.

7. Verfahren nach einem der vorhergehenden Ansprüche, wobei das große Sprachmodell ein Modell auf Basis künstlicher Intelligenz, insbesondere ein Grund-Modell ist, beispielsweise ein Bild-Text-Modell, VLM.

8. Verfahren nach einem der vorhergehenden Ansprüche, wobei bei der Verwendung des großen Sprachmodells dessen Leistungsfähigkeit beim Erzeugen der Langtextbeschreibungen berücksichtigt wird, beispielsweise ein Text-Bild-Abruf und/oder eine Klassifizierung.

9. Verfahren nach einem der vorhergehenden Ansprüche, wobei beim Training und beim Anwenden des Objektmodells eine Verlustfunktion bestimmt wird, um die Ähnlichkeit zwischen korrekten und falschen Zuordnungen zu berechnen, wobei bevorzugt der Taxonomie-verstärkte kontrastive Verlust, der "InfoNCE"-Verlust, und besonders bevorzugt der "Contrastive Alignment"-Verlust, CAL, bestimmt wird.

10. Verfahren nach einem der vorhergehenden Ansprüche, wobei das Produkt Teilprodukte aufweist, welche mithilfe eines Graphen beschrieben werden können, und beim Training und beim Anwenden des Objektmodells eine Distanzfunktion für den Graphen bestimmt wird, um die Distanz von Teilprodukten zu berechnen.

11. Verfahren nach einem der vorhergehenden Ansprüche, wobei die Menge an Trainingsbildern ferner zumindest ein Trainingsbild umfasst, welches eine ähnliche Abbildung des Objekts umfasst, wobei die Ähnlichkeit anhand einer Ähnlichkeitsfunktion bestimmt wird, deren Wert in einem vorbestimmten Wertebereich liegt.

12. Verfahren nach einem der vorhergehenden Ansprüche, wobei die Menge an Trainingsbildern ferner zumindest ein Trainingsbild umfasst, welches eine ähnliche Abbildung des Objekts umfasst, wobei die Ähnlichkeit anhand einer Distanzfunktion bestimmt wird, deren Wert in einem vorbestimmten Wertebereich liegt.

13. System zum Erkennen eines Objekts in einem digitalen Bild, umfassend eine Rechenvorrichtung mit einem Prozessor und einem Speicher, wobei das System dazu eingerichtet ist, das Verfahren nach einem der vorhergehenden Ansprüche auszuführen.

14. System nach dem vorhergehenden Anspruch, welches ferner einen bildgebenden Sensor umfasst, welcher dazu eingerichtet ist, ein hergestelltes Produkt als Objekt mithilfe eines digitalen Bilds zu erfassen.

15. Computer-Programm-Produkt, umfassend Befehle, die bei der Ausführung des Programms durch das System nach einem der vorhergehenden System-Ansprüche dieses veranlassen, das Verfahren/die Schritte des Verfahrens nach einem der vorhergehenden Verfahrens-Ansprüche auszuführen.
